# EUROPÄISCHE PATENTSCHRIFT

(11) **EP 2 666 577 B1**
(45) Veröffentlichungstag und Bekanntmachung des Hinweises auf die Patenterteilung: **03.02.2016**
(21) Anmeldenummer: 12004114.0
(22) Anmeldetag: 25.05.2012
(51) Int. Cl.: B23K 11/30

(54) **Vorrichtung zum Abheben einer Elektrodenkappe von dem Konus eines Elektrodenschafts einer Schweisseinrichtung**
Device for withdrawing an electrode cap from the cone of an electrode shaft of a welding device
Dispositif destiné à l'enlèvement d'un embout d'électrode du cône d'un corps d'électrode d'un dispositif de soudage

(43) Veröffentlichungstag der Anmeldung: 27.11.2013
(73) Patentinhaber: Kyokutoh Europe GmbH, 81373 München (DE)
(72) Erfinder: KAESELER, Werner, 34225 Baunatal (DE)
(74) Vertreter: Walther, Walther & Hinz GbR

(56) Entgegenhaltungen:
- FR-A1- 2 802 455

## Beschreibung

Die vorliegende Erfindung betrifft eine Vorrichtung zum Abheben einer Elektrodenkappe von dem Konus eines Elektrodenschafts einer Schweißeinrichtung, wobei die Elektrodenkappe derart auf dem Konus aufsitzt, dass ein nutartiger, umlaufender Freiraum zwischen einem Anlaufbund des Elektrodenschafts und dem anlaufbundseitigen Ende der Elektrodenkappe gebildet ist, wobei die Vorrichtung zwei aufeinander gegenüberliegenden Seiten eines Elektrodenschafts in den nutartigen, umlaufenden Freiraum einführbare Spreizglieder aufweist, wobei die Spreizglieder zum Abheben der Elektrodenkappe im Bereich ihrer Bewegung in dem Freiraum eine ansteigende Randkontur aufweisen.

Bei der Arbeit von Industrieschweißrobotern unterliegen die Elektroden der Schweißzangen einem kontinuierlichen Verschleiß. Abgenutzte Elektroden führen aber zu fehlerhaften Schweißpunkten oder können die Ursache dafür sein, dass Schweißverbindungen nicht zustande kommen. Die Qualität der zusammengefügten Bauteile und die Produktivität hängen somit direkt vom Zustand der Elektroden ab. Deshalb werden auf die vorhandenen Schäfte zusätzliche Elektrodenkappen aufgesetzt, die als leicht entfernbares Verschleißteil dienen. Sie werden je nach Anwendungsfall alle 2.000 bis 10.000 Schweißpunkte gewechselt. Dabei weist jede Schweißzange zwei Elektrodenkappen auf. In der Regel werden die Elektrodenkappen unter Aufbringung einer Vorpresskraft auf den Konus des Strom führenden Elektrodenschafts aufgebracht. Der Austausch der Elektrodenkappen wird häufig manuell mit unterschiedlichsten Werkzeugen ausgeführt, wobei damit oft Beschädigungen und damit ein erhöhter Verschleiß der Elektrodenschäfte einhergeht. Insbesondere verbiegt sich beim Wechseln der Elektrodenkappen oft auch der Elektrodenschaft, was zu fehlerhaften Schweißstellen führt. Die daraus resultierenden Stillstands- bzw. Ausfallzeiten sind kostspielig. Durch einen automatischen Elektrodenkappenwechsel verkürzen sich die Stillstandszeiten, wobei ein schonender Elektrodenkappenwechsel die Ausfallzeiten reduziert und die Zuverlässigkeit erhöht.

In der Gebrauchsmusterschrift DE 202 09 401 U1 oder des Druckschrift FR-A-2802455 ist ein Abziehwerkzeug zum automatischen Abziehen von Elektrodenkappen beschrieben, bei dem zumindest ein Teil tangential in den Spalt zwischen Elektrodenkappe und Elektrodenschaft geschoben wird. In einer Weiterbildung dieses Abziehwerkzeugs ist auch die Anordnung von zwei Keilen an den Zinken einer Gabel oder eine weitere Gabel zum Entfernen der zweiten Elektrodenkappe einer Schweißzangen vorgesehen. Nachteilig üben die mit zunehmender Eindringtiefe dicker werdenden Teile beim Abziehen der Elektrodenkappe eine erhebliche Kippkraft auf den Kegelsitz des Elektrodenschafts aus. Daraus resultiert ein erhöhter Verschleiß der Elektrodenschäfte einer Schweißzange.

Die Patentschrift EP 1 690 625 B1 offenbart eine Elektrodenkappenentfernungsmaschine, bei der eine Doppelgabel mit aneinanderliegenden Klauen zwischen Elektrodenkappe und Elektrodenschaft geschoben wird und die beiden Klauen auseinandergedrückt werden, wobei die bewegbare Klaue in Bezug auf die feststehende Klaue verschwenkbar an einer Welle angebracht ist. Hinweise oder Anregungen für eine sichere Führung während des Abziehvorgangs der Elektrodenkappe sind diesem Stand der Technik ersichtlicht nicht zu entnehmen.

Die japanische Patentschrift JP 2002 079382 A beschreibt eine Anordnung, bei der eine Klaue ohne Keil in den Spalt zwischen Elektrodenkappe und Elektrodenschaft geschoben wird und dann die Elektrodenkappe mittels einer Parallelführung gekippt wird, sodass die Elektrodenkappe vom Elektrodenschaft gedrückt wird. Dabei wird eine erhebliche Kippkraft auf den Kegelsitz des Elektrodenschafts ausgeübt, was zum Verschleiß führt. Die Anordnung sieht zwei Klauen zum gleichzeitigen Abhebeln beider Elektrodenkappen einer Schweißzangen vor.

In der Patentschrift US 6,667,454 B2 ist eine Anordnung beschrieben, die einen Schieber besitzt, der sich in den Spalt zwischen Elektrodenschaft und Elektrodenkappe schiebt, wobei die Elektrodenkappe durch keilförmige Zinken vom Elektrodenschaft gedrückt wird.

Bei dem in der Patentanmeldung US 2005/016967 A1 gezeigten Elektrodenkappenabzieher werden die Klauen zum Abziehen der Elektrodenkappe vom Elektrodenschaft einseitig über eine gabelförmige Keilanordnung senkrecht an einer Führung parallel auseinander bewegt. Der hier beschriebene Elektrodenkappenabzieher ist relativ aufwendig ausgebildet.

Aus der DE 20 2011 105 419.9 U1 ist ebenfalls eine Vorrichtung zum Abheben einer Elektrodenkappe bekannt, bei der durch zwei keilförmige Gabeln eines Gabelpaares, die in den nutartigen Freiraum zwischen Kappe und dem Bund des Elektrodenschafts einführbar sind, die Elektrodenkappe derart abgehoben wird, dass Kippmomente weitgehend vermieden werden. Dies deshalb, weil die Anordnung der keilförmigen Zinken der beiden Gabeln derart ist, dass die Zinken mit ihren schrägen Flächen aufeinander gleiten, und insofern die Kappen somit in Richtung der Mittellängsachse des Elektrodenschafts ohne eine Kippbewegung abgehoben werden. Nachteilig an dieser bekannten Vorrichtung ist, dass diese sehr voluminös baut, und auch aufwendig in der Herstellung ist.

Die der Erfindung zugrunde liegende Aufgabe besteht darin, eine Vorrichtung der eingangs genannten Art bereitzustellen, mit der die Elektrodenkappe ohne ein nennenswertes Kippmoment vom Elektrodenschaft abgehoben werden kann, und die darüber hinaus einfach in der Herstellung ist und nur einen geringen Bauraum benötigt.

Die Lösung der Aufgabe erfolgt durch die Merkmale des kennzeichnenden Teils des Anspruches 1 in Verbindung mit den Merkmalen des Oberbegriffs. Hieraus wird deutlich, dass zu jeder Seite des Elektrodenschafts in den nutartigen, umlaufenden Freiraum, der einerseits durch den Bund der Kappe und andererseits durch einen Bund am Elektrodenschaft gebildet wird, jeweils gesondert ein Spreizglied eingeführt wird, wobei hierdurch die Möglichkeit besteht, die Bewegung der beiden Spreizglieder so auszugestalten, dass das Abheben der Elektrodenkappe vom Schaft ohne ein Kippmoment dadurch erfolgt, dass einer rotatorischen Bewegung der Kappe eine translatorische Bewegung überlagert wird. Oder anders ausgedrückt bedeutet dies, dass die Elektrodenkappe beim Abheben eine schraubenförmige Bewegung ausführt. Die Kappe wird somit während der Bewegung der Spreizglieder am Bund drehend mitgenommen.

Aus den Unteransprüchen ergeben sich zwei vorteilhafte Ausführungsformen, einschließlich der entsprechenden Merkmale zu diesen Ausführungsformen, die jeweils gesondert abgehandelt werden.

So ist nach einer ersten Ausführungsform vorgesehen, dass die Spreizglieder auf zumindest ihrer der Elektrodenkappe zugewandten Seite in der Draufsicht eine teilkreis- oder teilringförmige Rampe zum drehbaren Eingriff in den nutartigen, umlaufenden Freiraum aufweisen. Hieraus wird deutlich, dass jedes Spreizglied auf seinem äußeren Umfang in der Draufsicht zumindest im Bereich des nutartigen, umlaufenden Freiraums kreisförmig oder zumindest teilkreisförmig ausgebildet ist. Das heißt, es kann durch eine rotierende Bewegung der beiden kreisförmigen oder teilkreisförmigen Spreizglieder, zwischen denen sich der Elektrodenschaft mit der abzuhebenden Kappe befindet, das Abheben der Elektrodenkappe bewirkt werden. Das heißt, dass durch die beiden teilkreis- oder teilringförmigen Rampen, die insbesondere nach Art einer Wendel ausgebildet sind, durch eine drehende Bewegung, der eine translatorische Bewegung aufgrund der wendelartig ausgebildeten Rampe überlagert ist, ein kippmomentfreies Abheben der Elektrodenkappe vom Elektrodenschaft ermöglicht werden. Oder anders ausgedrückt heißt dies, dass die beiden Spreizglieder sich relativ zu dem Elektrodenschaft in dem nutartigen, umlaufenden Freiraum drehen und durch die schraubenartige Ausbildung der Rampe für das Abheben der Kappe gesorgt wird. Die Spreizglieder sind somit drehbar ausgebildet, wobei es sich als vorteilhaft herausgestellt hat, wenn die Drehbewegung der Spreizglieder gegenläufig ist.

Bei der Drehbewegung der teilkreis- oder teilringförmigen Rampe steht die Rampe in formschlüssigem oder kraftschlüssigem Eingriff mit dem Bund der Elektrodenkappe. Das heißt, die Elektrodenkappe dreht sich in gleicher Weise wie die Rampe. Dies kann beispielsweise dadurch bewerkstelligt werden, dass die Rampe auf ihrer dem Bund der Kappe zugewandten Seite eine Zahnung o. ä. aufweist, so dass bei Drehung der Rampe die Elektrodenkappe mitdreht. Das heißt, das Abheben der Kappe erfolgt durch eine Kombination einer translatorischen mit einer rotatorischen Bewegung, wie dies bereits dargelegt wurde. Es hat sich herausgestellt, dass durch diese Überlagerung beider Bewegungsarten beim Abheben der Kappe jegliche Verkippung der Kappe auf dem Elektrodenschaft verhindert wird.

Wesentlich hierbei ist allerdings insbesondere auch, dass die Anordnung der Spreizglieder zueinander derart ist, dass die ansteigende Randkontur der Rampe des einen Spreizgliedes der des anderen Spreizgliedes genau gegenüberliegt, sodass in einer die Mittelpunkte beider Spreizglieder verbindenden Linie die Höhe der Kontur immer die gleiche ist. Wenn somit die Höhe der Rampe zu jeder Seite des Schafts immer gleich ist, wird erreicht, dass die Kappe zum Abheben eine reine Axialbewegung erfährt. Dies gilt sowohl bei gleichläufig sich drehenden Spreizgliedern, als auch bei solchen, die sich gegenläufig drehen.

Nach einem besonders vorteilhaften Merkmal der Erfindung ist vorgesehen, dass zur rotatorischen Bewegung der Spreizglieder ein einziger Antrieb vorgesehen ist. Denkbar ist in diesem Zusammenhang zur Koppelung der beiden Spreizglieder, d. h. zur Kopplung der Drehbewegung der beiden Spreizglieder, ein durch einen Motor, z. B. einen Elektromotor, angetriebenes Ritzel vorzusehen, das mit zwei an den drehbar angeordneten Spreizgliedern fixierten Zahnrädern kämmt. Durch eine solche Zwangskopplung wird somit sichergestellt, dass die Drehbewegung der Spreizglieder aufeinander abgestimmt ist. Um eine gegenläufige Bewegung der beiden Spreizglieder zu bewirken, kann ein Rädergetriebe zwischen dem Antriebsritzel und den sich drehenden Spreizgliedern vorgesehen sein, oder aber durch das Ritzel werden die beiden hintereinander angeordneten Zahnräder eines jeden Spreizglieds angetrieben. Das heißt, das Ritzel befindet sich auf einer Außenseite der beiden Zahnräder zum Antrieb der Spreizglieder.

Es gibt Elektrodenschäfte, die im Bereich des nutartigen, umlaufenden Freiraums einen unterschiedlichen Querschnitt aufweisen. Das heißt, dass auch die Kappen einen unterschiedlichen Durchmesser zeigen. Ziel ist nun, mit einer einzigen Vorrichtung Kappen unterschiedlichen Durchmessers von Schweißzangen mit Schäften ebenfalls unterschiedlichen Durchmessers abzuheben. Um dies zu gewährleisten, sind drei Spreizglieder vorgesehen, wobei der Radius der teilkreis- oder teilringförmigen Rampe zweier zueinander unmittelbar benachbart angeordneter Spreizglieder gleich ist. Das heißt, jeweils zwei Spreizglieder bilden ein Paar, wobei zwischen einem Spreizgliederpaar die Kappen von Elektrodenschäften mit einem bestimmten Durchmesser abgehoben werden. Hieraus wird deutlich, dass bei der Anordnung von drei Spreizgliedern die Abstände zwischen jeweils zwei Spreizgliedern eines Spreizgliederpaares gleich sind. Wesentlich hierbei ist ebenfalls, dass der Radius der teilkreis- oder teilringförmigen Rampen ebenfalls gleich ist, um sicherzustellen, dass bei einer unmittelbaren Kopplung der beiden Spreizglieder eines Spreizgliederpaares durch eine Zahnradanordnung die Umfangsgeschwindigkeit dieses Paares von Spreizgliedern gleich ist. Das bedeutet, dass bei beispielsweise drei in Reihe angeordneten rotierenden Spreizgliedern der Radius zweier aufeinander zugewandter teilringförmiger Rampen, die - wie bereits ausgeführt - wendelförmig ausgebildet sind, auf ihren einander zugewandten Seiten, mit denen diese Spreizglieder in den umlaufenden, nutartigen Zwischenraum eingreifen, gleich sind, der Radius allerdings durchaus unterschiedlich ist zu dem Radius der teilkreis- oder teilringförmigen Rampe des mittleren Spreizgliedes und dem weiteren ihm unmittelbar benachbarten Spreizglied, die wiederum ein Spreizgliederpaar bilden. Das heißt, dass mit einem einzigen Antrieb für drei Spreizglieder, die insbesondere in Reihe zueinander angeordnet sind, der Radius jeweils zweier einander unmittelbar gegenüberliegender teilkreisförmiger Rampen gleich ist, aber die Umfangsgeschwindigkeit des einen Rampenpaares unterschiedlich zu dem des anderen Rampenpaares ist.

Eine weitere, zweite Ausführungsform zeichnet sich dadurch aus, dass die Spreizglieder stangenförmig ausgebildet sind, und auf ihrer der Elektrodenkappe zugewandten Seite jeweils einen ersten Abschnitt nach Art einer keilförmigen Rampe zum Eingriff in den nutartigen, umlaufenden Freiraum aufweisen. Hieraus wird deutlich, dass die Spreizglieder, die - wie bereits ausgeführt - relativ zueinander beweglich sind, von beiden Seiten aufeinander zulaufend in den Freiraum eingeführt werden. Wenn die keilförmigen Rampen in form- oder kraftschlüssigem Eingriff mit dem Bund der Elektrodenkappe gelangen, wie dies der Fall ist, wenn z. B. die Rampe auf ihrer dem Bund zugewandten Seite eine Zahnung aufweist, wird die Elektrodenkappe drehend, d. h. schraubenlinienförmig abgehoben. Auch hierdurch wird die Kappe von dem Elektrodenschaft parallel zur Mittellängsachse des Elektrodenschafts drehend abgehoben, ohne dass die Kappe ein Kippmoment erfährt.

Nach einem besonderen Merkmal der Erfindung ist in Bezug auf diese Ausführungsform vorgesehen, dass die Spreizglieder einen zweiten Abschnitt aufweisen, der nach Art einer Zahnstange ausgebildet ist. Die beiden Zahnstangen sind hierbei durch ein Ritzel ähnlich einem Drillantrieb verbunden. Hierbei ist die Kupplung der beiden stangenförmigen Spreizglieder durch das Ritzel derart, dass die Höhe der beiden keilförmigen Rampen bei Eingriff in den nutartigen, umlaufenden Freiraum jeweils gleich ist, um eben - wie bereits ausgeführt - ein kippmomentfreies Abheben der Kappe zu bewerkstelligen.

Anhand der Zeichnungen wird die Erfindung nachstehend beispielhaft näher erläutert.
- Fig. 1: zeigt eine erste Ausführungsform einer Vorrichtung zum Abheben einer Elektrodenkappe mit drei nebeneinander angeordneten rotierenden Spreizgliedern;
- Fig. 2: zeigt eine Ansicht von oben auf die Vorrichtung gemäß Fig. 1;
- Fig. 3: zeigt eine Ansicht gemäß der Linie III/III aus Fig. 1;
- Fig. 4: zeigt eine zweite Ausführungsform der Vorrichtung zum Abheben einer Elektrodenkappe in einer Ansicht von oben;
- Fig. 5: zeigt eine Ansicht gemäß der Linie V/V aus Fig. 4.

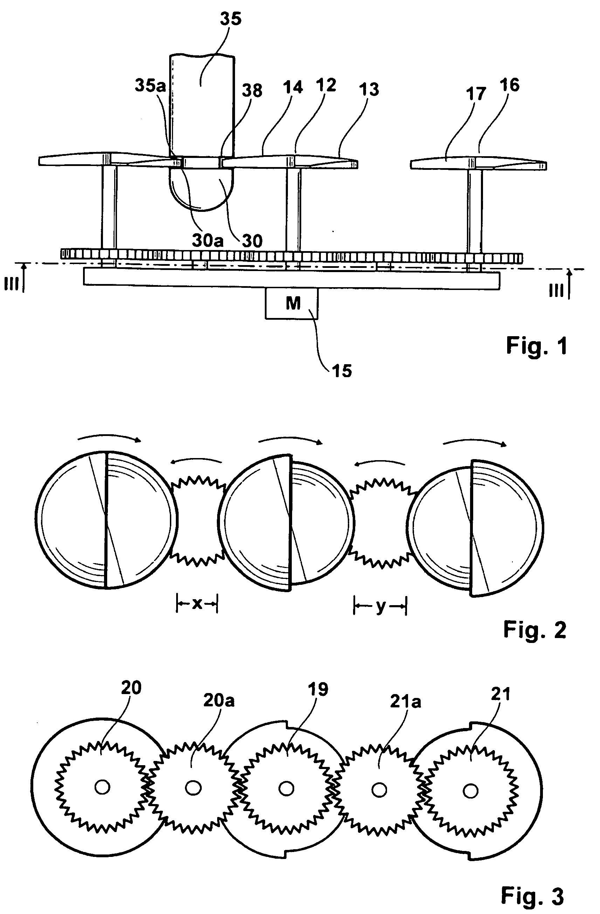

Bei der ersten Ausführungsform, so wie sie in den Figuren 1 bis 3 dargestellt ist, sind drei nebeneinander angeordnete Spreizglieder 10, 12 und 16 vorgesehen, wobei die beiden Spreizglieder 10 und 12 einen geringeren lichten Abstand X voneinander aufweisen, als die beiden Spreizglieder 12 und 16, die den Abstand Y zueinander aufweisen, wie sich dies aus Fig. 2 unmittelbar ergibt. Die drei Spreizglieder 10 bis 16 sind durch einen Motor 15 angetrieben, wobei zum Antrieb durch den Motor 15 eine unmittelbare Verbindung zum einen zwischen dem Motor 15 und dem Spreizglied 12 vorgesehen ist, und zum anderen die Spreizglieder 10 bis 16 durch entsprechende Zahnräder 20, 20a, 21, 21 a durch das Ritzel 19 des Motors 15 angetrieben werden. Aus der Anordnung der Spreizglieder 10 bis 16 ist erkennbar, dass die Spreizglieder sich gleichsinnig drehen, das heißt die gleiche Drehrichtung aufweisen.

Relevant für die Erfindung und somit zum Abheben der Elektrodenkappe 30 von dem Elektrodenschaft 35 ist nun die Ausbildung der Spreizglieder im Bereich des nutartigen, umlaufenden Freiraums 38 zwischen Elektrodenkappe 30 und Elektrodenschaft 35. Die beiden Spreizglieder 10 und 12 weisen auf ihren einander zugewandten Seiten eine teilkreis- oder teilringförmige Rampe 11, 14 auf, wobei die Teilkreise der teilringförmigen Rampe nach Art einer Wendel eine ansteigende Kontur zeigen. Drehen sich die beiden tellerförmigen Spreizglieder 10 und 12 in dem nutartigen, umlaufenden Freiraum 38, dann findet durch die ansteigende Kontur der beiden Rampen 11 und 14 ein Abspreizen der Elektrodenkappe von dem Elektrodenschaft statt. Das heißt, dass die Höhe der Rampe größer ist, als die Breite des Freiraumes zwischen dem Bund 35a des Elektrodenschaftes und dem Bund 30a der Kappe.

Es wurde bereits darauf hingewiesen, dass die beiden Spreizglieder 12 und 16 einen anderen Abstand Y zueinander aufweisen, als die Spreizglieder 10 und 12. Um die beiden Spreizglieder 12 und 16 mit der gleichen Umfangsgeschwindigkeit rotieren zu lassen, ist vorgesehen, dass die teilkreis- oder teilringförmige Rampen 13, 17 einen gleichen Radius aufweisen, der allerdings von dem der Rampen 11 und 14 durchaus abweicht, und zwar aufgrund der unterschiedlichen Abstände X, Y. Insofern zeigen die Spreizglieder 10 und 12 über einen Winkel von etwa 180° eine Rampe mit gleichem Radius, was ebenfalls gilt für die Spreizglieder 12 und 16, die auf ihren einander zugewandten Seiten jeweils eine Rampe 13 und 17 zeigen, deren Radius ebenfalls gleich ist aber zu dem unterschiedlich ist der beiden Rampen 11, 14 an den Spreizgliedern 10 und 12. Wesentlich hierbei ist, dass die Umfangsgeschwindigkeit über die jeweils ein Paar bildenden Rampen 13 und 17 und 11 und 14 über einen Winkel von etwa 180° immer gleich ist. Dies deshalb, um zu gewährleisten, dass an jedem Punkt, an dem die Rampe des einen Spreizgliedes in Eingriff mit dem umlaufenden, nutartigen Freiraum 38 gelangt, immer gleich mit der Höhe der Rampe des gegenüberliegenden Spreizgliedes ist.

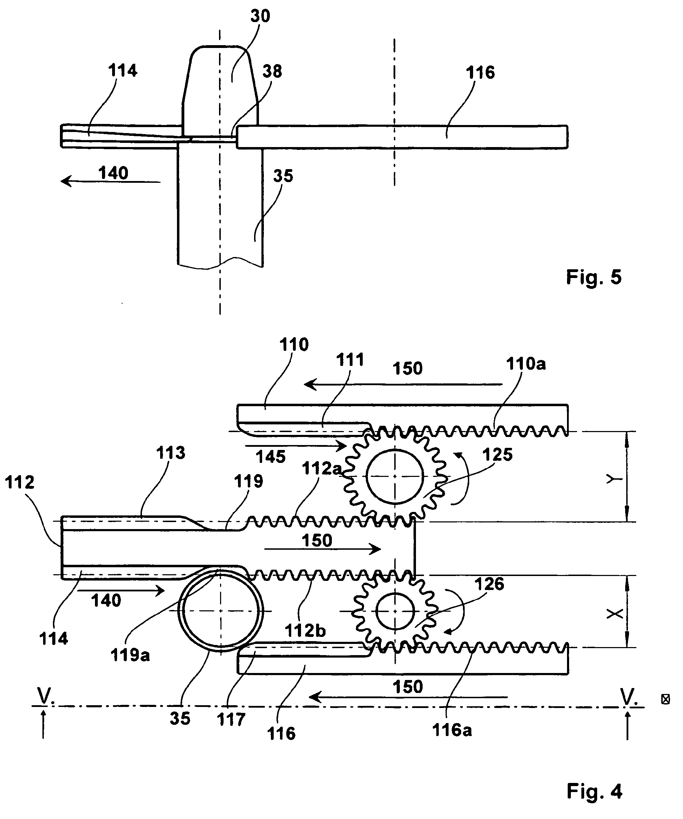

Bei der zweiten Ausführungsform gemäß den Figuren 4 und 5 sind die Spreizglieder 110, 112 und 116 stangenförmig ausgebildet, wie sich dies unmittelbar in Anschauung der Fig. 4 ergibt. Auch hier sind unterschiedliche Abstände X, Y für entsprechend unterschiedliche Schaftdurchmesser der Elektroden vorgesehen. Das stangenförmige Spreizglied 112 weist zu beiden Seiten einen ersten Abschnitt auf, der durch die beiden ansteigenden Rampen 113 und 114 gekennzeichnet ist. An diesen ersten Abschnitt schließt sich zu beiden Seiten durchaus mit einem Abstand 119, 119a jeweils ein zweiter Abschnitt an, der als Zahnstangenantrieb 112a, 112b ausgebildet ist. Die beiden stangenförmigen Spreizglieder 110, 116 zeigen auf ihrer dem Spreizglied 112 zugewandten Seite ebenfalls jeweils eine ansteigende Rampe 111 und 117 auf, die wiederum einen ersten Abschnitt des stangenförmigen Spreizgliedes 110, 116 bilden. Die Ausbildung der Rampen der einander zugewandten Spreizglieder ist identisch. Die beiden Spreizglieder 110, 116 zeigen darüber hinaus einen zweiten Abschnitt, der als Zahnstangenabschnitt 110a, 116a gekennzeichnet ist. Zwischen den beiden Zahnstangenabschnitten 110a, 112a und 112b, 116a befinden sich Zahnräder 125, 126. Der Antrieb der beiden Zahnräder 125 und 126 erfolgt durch ein nicht dargestelltes Zahnräderwerk. Es wurde bereits darauf hingewiesen, dass das stangenförmige Spreizglied 112 zwischen den beiden Abschnitten 113, 114 einerseits und den Zahnstangenabschnitten 112a, 112b andererseits eine Aussparung 119, 119a besitzt. Im Ausgangszustand, das heißt vor Abspreizen der Kappe 30 von dem Elektrodenschaft 35 befindet sich der Elektrodenschaft 35 im Bereich dieser Aussparung 119, 119a, wobei dann bei Antrieb des Zahnrades 126 ähnlich einem Drillantrieb die beiden Zahnstangen 112 und 116 relativ zueinander verschoben werden (Pfeile 150). Gleiches gilt entsprechend bei Antrieb des Zahnrades 125 in Bezug auf die beiden stangenförmigen Spreizglieder 110, 112 mit ihren einander zugewandten Rampen 111, 113. Aus Fig. 5 ist erkennbar, dass die Rampe 114 in Richtung des Pfeiles 140 ansteigend ist. In gleicher Weise wie die Rampe 114 ist auch die Rampe 113 ausgebildet, wobei jedoch die beiden Rampen 111 und 117 entsprechend in Richtung des Pfeils 145 ansteigend ausgebildet sind. Die Rampen 111, 113, 114, 117 greifen jeweils in den nutartigen, umlaufenden Freiraum 38 ein, wie dies bereits in Bezug auf die erste Ausführungsform gemäß den Figuren 1 bis 3 beschrieben wurde.

### Bezugszeichenliste:

- 10: Spreizglied
- 11: teilkreis- oder teilringförmige Rampe
- 12: Spreizglied
- 13: teilkreis- oder teilringförmige Rampe
- 14: teilkreis- oder teilringförmige Rampe
- 15: Motor
- 16: Spreizglied
- 17: teilkreis- oder teilringförmige Rampe
- 19: Ritzel
- 20: Zahnrad
- 20a: Zahnrad
- 21: Zahnrad
- 21a: Zahnrad
- 30: Elektrodenkappe
- 30a: Unterseite der Elektrodenkappe (= Bund der Kappe)
- 35: Elektrodenschaft
- 35a: Bund
- 38: nutartiger, umlaufender Freiraum
- 110: stangenförmiges Spreizglied
- 110a: Zahnstangenabschnitt (2. Abschnitt)
- 111: ansteigende Rampe (1. Abschnitt)
- 112: stangenförmiges Spreizglied
- 112a: Zahnstangenantrieb (2. Abschnitt)
- 112b: Zahnstangenantrieb (2. Abschnitt)
- 113: ansteigende Rampe (1. Abschnitt)
- 114: ansteigende Rampe (1. Abschnitt)
- 116: Spreizglied
- 116a: Zahnstangenabschnitt (2. Abschnitt)
- 117: ansteigende Rampe (1. Abschnitt)
- 119: Aussparung
- 119a: Aussparung
- 125: Zahnrad
- 126: Zahnrad
- 140: Pfeil
- 145: Pfeil
- 150: Pfeil

## Patentansprüche

1. Vorrichtung zum Abheben einer Elektrodenkappe (30) von dem Konus eines Elektrodenschafts (35) einer Schweißeinrichtung, wobei die Elektrodenkappe (30) derart auf dem Konus aufsitzt, dass ein nutartiger, umlaufender Freiraum (38) zwischen einem Anlaufbund (35a) des Elektrodenschafts (35) und dem anlaufbundseitigen Ende der Elektrodenkappe (30) gebildet ist, wobei die Vorrichtung auf zwei aneinander gegenüberliegenden Seiten des Elektrodenschafts (35) in den nutartigen, umlaufenden Freiraum (38) einführbare Spreizglieder (10, 12, 16; 110, 112, 116) aufweist, wobei die Spreizglieder (10, 12, 16; 110, 112, 116) zum Abheben der Elektrodenkappe (30) im Bereich ihrer Bewegung in den Freiraum (38) eine ansteigende Randkontur aufweisen,
**dadurch gekennzeichnet,**
**dass** die Spreizglieder (10, 12, 16; 110, 112, 116) derart relativ zueinander beweglich sind, dass die Elektrodenkappe (30) vom Elektrodenschaft (35) durch eine rotatorische mit einer überlagerten translatorischen Bewegung abgehoben wird.

2. Vorrichtung nach Anspruch 1,
**dadurch gekennzeichnet,**
**dass** die Spreizglieder (10, 12, 16) auf zumindest ihrer der Elektrodenkappe (30) zugewandten Seite in der Draufsicht eine teilkreis- oder teilringförmige Rampe (11, 13, 14, 17) zum drehbaren Eingriff in den nutartigen, umlaufenden Freiraum (38) aufweisen.

3. Vorrichtung nach Anspruch 2,
**dadurch gekennzeichnet,**
**dass** die Rampe (11, 13, 14, 17) eine ansteigende Kontur nach Art einer Wendel aufweist.

4. Vorrichtung nach einem der voranstehenden Ansprüche 2 oder 3,
**dadurch gekennzeichnet,**
**dass** die Spreizglieder (10, 12, 16) drehbar ausgebildet sind.

5. Vorrichtung nach Anspruch 4,
**dadurch gekennzeichnet,**
**dass** die Spreizglieder (10, 12, 16) gegenläufig drehbar ausgebildet sind.

6. Vorrichtung nach einem der voranstehenden Ansprüche 2 bis 5,
**dadurch gekennzeichnet,**
**dass** die Anordnung der Spreizglieder (10, 12, 16) zueinander derart ist, dass die ansteigende Randkontur der Rampe (11, 13, 14, 17) des einen Spreizgliedes (10, 12, 16) der des anderen Spreizgliedes (10, 12, 16) genau gegenüberliegt, sodass in einer die Mittelpunkte beider Spreizglieder (10, 12, 16) verbindenden Linie die Höhe der Kontur immer gleich ist.

7. Vorrichtung nach einem der voranstehenden Ansprüche 2 bis 6,
**dadurch gekennzeichnet,**
**dass** zur rotatorischen Bewegung der Spreizglieder (10, 12, 16) ein insbesondere einziger Antrieb (15) vorgesehen ist.

8. Vorrichtung nach einem der voranstehenden Ansprüche 2 bis 7,
**dadurch gekennzeichnet,**
**dass** zwei oder mehr Spreizglieder (10, 12, 16) vorgesehen sind, wobei der Radius der teilkreis- oder teilringförmigen Rampen (11, 13, 14, 17) zweier ein Paar bildender zueinander unmittelbar benachbart angeordneter Spreizglieder (10, 12; 12, 13) gleich ist.

9. Vorrichtung nach Anspruch 8,
**dadurch gekennzeichnet,**
**dass** das Spreizglied (12) zwei teilkreis- oder teilringförmige Rampen (13, 14) mit unterschiedlichem Radius aufweist.

10. Vorrichtung nach einem der voranstehenden Ansprüche, 2 bis 9, **dadurch gekennzeichnet,**
**dass** die teilkreis- oder teilringförmige Rampe (11, 13, 14, 17) während der Drehbewegung in Eingriff mit dem Bund (35a) der Elektrodenkappe (30) steht, so dass die Elektrodenkappe drehend abgehoben wird.

11. Vorrichtung nach Anspruch 1,
**dadurch gekennzeichnet,**
**dass** die Spreizglieder (110, 112, 116) stangenförmig ausgebildet sind und auf ihrer der Elektrodenkappe (30) zugewandten Seite jeweils einen ersten Abschnitt aufweisen, der nach Art einer keilförmigen Rampe (111, 113, 114, 117) zum Eingriff in den nutartigen, umlaufenden Freiraum (38) aufweist.

12. Vorrichtung nach Anspruch 11,
**dadurch gekennzeichnet,**
**dass** die Spreizglieder (110, 112, 116) einen zweiten Abschnitt aufweisen, der nach Art einer Zahnstange (110a, 112a, 112b, 116a) ausgebildet ist.

13. Vorrichtung nach Anspruch 11 oder 12,
**dadurch gekennzeichnet,**
**dass** zwei stangenförmige Spreizglieder (110, 112; 112, 116) im Bereich des zweiten Abschnittes durch ein drehangetriebenes Ritzel (125, 126) miteinander in Verbindung stehen.

14. Vorrichtung nach Anspruch 13,
**dadurch gekennzeichnet,**
**dass** die Kupplung der beiden stangenförmigen Spreizglieder (110, 112; 112, 116) durch das Ritzel (125, 126) derart ist, dass die Höhe jeder keilförmigen Rampe (111, 113, 114, 117) bei Eingriff in den nutartigen, umlaufenden Freiraum (38) gleich ist.

15. Vorrichtung nach einem der Ansprüche 11 bis 14,
**dadurch gekennzeichnet,**
**dass** die keilförmige Rampe (111, 113, 114, 117) in Eingriff mit dem Bund (35a) der Elektrodenkappe (30) steht, so dass die Elektrodenkappe bei gegenläufiger Bewegung zweier stangenförmigen Spreizglieder (110, 112, 116) drehend abgehoben wird.

## Claims

1. A device for withdrawing an electrode cap (30) from the cone of an electrode shaft (35) of a welding device, wherein the electrode cap (30) is placed on the cone in such a manner, that a groove-like circumferential free space (38) is formed between the a stop collar (35a) of the electrode shaft (35) and the end of the electrode cap (35) on the stop-collar side, wherein the device comprises spreading elements (10, 12, 16; 110, 112, 116) which are insertable on two opposite sides of the electrode shaft (35) into the grove-like, circumferential free space (38), wherein the spreading elements (10, 12, 16; 110, 112, 116) have a rising edge contour for withdrawing the electrode cap (30) in the area of its movement into the free space (38),
**characterized in that**
the spreading elements (10, 12, 16; 110, 112, 116) are displaceable relative to each other in such a manner that the electrode cap (30) is lifted off the electrode shaft (35) through a rotational movement with a superimposed translational movement.

2. The device according to claim 1,
**characterized in that**
in a top view the spreading elements (10, 12, 16) have a partially circular or partially annular ramp (11, 13, 14, 17) at least on their side facing the electrode cap (30) for rotatably engaging with the groove-like, circumferential free space (38).

3. The device according to claim 2,
**characterized in that**
the ramp (11, 13, 14, 17) has a rising spiral-type contour.

4. The device according to one of the afore-mentioned claims 2 or 3,
**characterized in that**
the spreading elements (10, 12, 16) are designed to be rotatable.

5. The device according to claim 4,
**characterized in that**
the spreading elements (10, 12, 16) are designed to be rotatable in opposite directions.

6. The device according to one of the afore-mentioned claims 2 to 5,
**characterized in that**
the arrangement of the spreading elements (10, 12, 16) relative to each other is such that the rising edge contour of the ramp (11, 13, 14, 17) of the one spreading element (10, 12, 16) lies exactly opposite the one of the other spreading element (10, 12, 16), so that the height of the contour is always the same on a line connecting the centre points of both spreading elements (10, 12, 16).

7. The device according to one of the afore-mentioned claims 2 to 6,
**characterized in that**
a more specifically single drive (15) is provided for rotationally displacing the spreading elements (10, 12, 16).

8. The device according to one of the afore-mentioned claims 2 to 7,
**characterized in that**
two or more spreading elements (10, 12, 16) are provided, wherein the radiuses of the partially circular or partially annular ramps (11, 13, 14, 17) of two spreading elements (10, 12; 12, 13) forming a pair and disposed in the immediate vicinity of each other are equal.

9. The device according to claim 8,
**characterized in that**
the spreading member (12) has two partially circular or partially annular ramps (13, 14) with different radiuses.

10. The device according to one of the afore-mentioned claims 2 to 9,
**characterized in that**
during the rotational movement, the partially circular or partially annular ramp (11, 13, 14, 17) is engaged with the collar (35a) of the electrode cap (30), so that the electrode cap is lifted off through a rotational movement.

11. The device according to claim 1,
**characterized in that**
the spreading elements (110, 112, 116) are designed to be rod-shaped and have respectively on their side facing the electrode cap (30) a first section, which is shaped in the manner of a wedge-shaped ramp (111, 113, 114, 117) for engaging with the groove-like, circumferential free space (38).

12. The device according to claim 11,
**characterized in that**
the spreading elements (110, 112, 116) have a second section that is designed in the manner of a toothed rack (110a, 112a, 112b, 116a).

13. The device according to claim 11 or 12,
**characterized in that**
two rod-shaped spreading elements (110, 112; 112, 116) are connected to each other in the area of the second section by way of a rotationally driven pinion (125, 126).

14. The device according to claim 13,
**characterized in that**
the coupling of the two rod-shaped spreading elements (110, 112; 112, 116) by the pinion (125, 126) is such that the height of each wedge-shaped ramp (111, 113, 114, 117) is the same when engaged in the groove-like, circumferential free space (38).

15. The device according to one of the claims 11 to 14,
**characterized in that**
the wedge-shaped ramp (111, 113, 114, 117) is engaged with the collar (35a) of the electrode cap (30), so that when two rod-shaped spreading elements (110, 112, 116) are moved in opposite directions, the electrode cap is lifted off through a rotational movement.

## Revendications

1. Dispositif pour retirer un embout d'électrode (30) du cône d'un corps d'électrode (35) d'un dispositif de soudage, où l'embout d'électrode 30) est disposé sur le cône de telle manière qu'un espace libre (38) en forme de rainure périphérique soit ménagé entre un collet de butée (35a) du corps d'électrode (35) et l'extrémité de l'embout d'électrode (30) proximale du collet de butée, où le dispositif comporte des organes d'écartement (10, 12, 16 ; 110, 112, 116) sur deux côtés opposés du corps d'électrode (35) aptes à être introduit dans l'espace libre (38) en forme de rainure périphérique, où les organes d'écartement (10, 12, 16 ; 110, 112, 116) comportent, dans la région de leur mouvement d'introduction dans l'espace libre (38), un contour montant pour soulever l'embout d'électrode (30),
**caractérisé en ce que**
les organes d'écartement (10, 12, 16 ; 110, 112, 116) sont mobiles l'un par rapport à l'autre de telle manière que l'embout d'électrode (30) est soulevé du corps d'électrode (35) par un mouvement rotatif accompagné d'un mouvement translationnel.

2. Dispositif selon la revendication 1,
**caractérisé en ce que**
les organes d'écartement (10, 12, 16) comportent au moins sur leur côté faisant face à l'embout d'électrode (30) une rampe (11, 13, 14, 17) partiellement circulaire ou partiellement annulaire dans une vue d'en haut destinée à venir en prise de manière rotative dans l'espace libre (38) en forme de rainure périphérique.

3. Dispositif selon la revendication 2,
**caractérisé en ce que**
la rampe (11, 13, 14, 17) comporte un contour montant de type spirale.

4. Dispositif selon l'une quelconque des revendications 2 ou 3,
**caractérisé en ce que**
les organes d'écartement (10, 12, 16) sont conçus de manière à être rotatifs.

5. Dispositif selon la revendication 4,
**caractérisé en ce que**
les organes d'écartement (10, 12, 16) sont conçus de manière à être rotatifs dans des directions opposées.

6. Dispositif selon l'une quelconque des revendication 2 à 5,
**caractérisé en ce que**
l'agencement des organes d'écartement (10, 12, 16) l'un par rapport à l'autre est tel que le contour montant de la rampe (11, 13, 14, 17) de l'un des organes d'écartement (10, 12, 16) fait exactement face à celui de l'autre organe d'écartement (10, 12, 16), de telle manière que la hauteur du contour est toujours la même sur une ligne reliant les centres des deux organes d'écartement (10, 12, 16).

7. Dispositif selon l'une quelconque des revendication 2 à 6,
**caractérisé en ce qu'**
en particulier un seul entraînement (15) est prévu pour un mouvement rotatif des organes d'écartement (10, 12, 16).

8. Dispositif selon l'une quelconque des revendications 2 à 7, **caractérisé en ce que**
sont prévus deux ou plusieurs organes d'écartement (10, 12, 16), les rayons des rampes (11, 13, 14, 17) partiellement circulaires ou partiellement annulaires de deux organes d'écartement (10, 12 ; 12, 13) formant une paire et disposés de manière directement contiguë étant égaux.

9. Dispositif selon la revendication 8,
**caractérisé en ce que**
l'organe d'écartement (12) comporte deux rampes (13, 14) partiellement circulaires ou partiellement annulaires de rayon différent.

10. Dispositif selon l'une quelconque des revendications 2 à 9,
**caractérisé en ce que**
pendant le mouvement rotatif, la rampe (11, 13, 14, 17) partiellement circulaire ou partiellement annulaire est en prise avec le collet (35a) de l'embout d'électrode (30), de sorte que l'embout d'électrode est soulevé de manière rotative.

11. Dispositif selon la revendication 1,
**caractérisé en ce que**
les organes d'écartement (110, 112, 116) sont en forme de tige et comportent, sur leur côté faisant face à l'embout d'électrode (30), respectivement une première section configurée à la manière d'une rampe (111, 113, 114, 117) cunéiforme destinée à venir en prise avec l'espace libre (38) en forme de rainure périphérique.

12. Dispositif selon la revendication 11,
**caractérisé en ce que**
les organes d'écartement (110, 112, 116) comportent une deuxième section en forme de crémaillère (110a, 112a, 112b, 116a).

13. Dispositif selon la revendication 11 ou 12,
**caractérisé en ce que**
deux organes d'écartement (110, 112 ; 112, 116) en forme de tige sont connectés dans la région de la deuxième section par un pignon (125, 126) entraîné en rotation.

14. Dispositif selon la revendication 13,
**caractérisé en ce que**
l'accouplement des deux organes d'écartement (110, 112 ; 112, 116) par le pignon (125, 126) est tel que la hauteur de chaque rampe cunéiforme (111, 113, 114, 117) est identique lorsqu'elles sont en prise avec l'espace libre (38) en forme de rainure périphérique.

15. Dispositif selon l'une des revendications 11 à 14,
**caractérisé en ce que**
la rampe cunéiforme (111, 113, 114, 117) est en prise avec le collet (35a) de l'embout d'électrode (30) de telle manière que l'embout d'électrode est soulevé lors d'un mouvement opposé de deux organes d'écartement (110, 112, 116) en forme de tige.
